# EUROPÄISCHE PATENTSCHRIFT

(11) **EP 2 455 640 B1**
(45) Veröffentlichungstag und Bekanntmachung des Hinweises auf die Patenterteilung: **01.10.2014**
(21) Anmeldenummer: 11189097.6
(22) Anmeldetag: 15.11.2011
(51) Int. Cl.: F16H 57/04, F16C 33/66

(54) **Wellenanordnung**
Shaft assembly
Agencement d'arbre

(30) Priorität: 17.11.2010 DE 102010052310
(43) Veröffentlichungstag der Anmeldung: 23.05.2012
(73) Patentinhaber: GETRAG Getriebe- und Zahnradfabrik Hermann Hagenmeyer GmbH & Cie KG, 74199 Untergruppenbach (DE)
(72) Erfinder: Knoblauch, Daniel, 74199 Untergruppenbach (DE); Eichhorn, Wolfgang, 71726 Benningen (DE)
(74) Vertreter: Witte, Weller & Partner Patentanwälte mbB

(56) Entgegenhaltungen:
- EP-A2- 0 668 450
- EP-A2- 1 906 036
- DE-A1- 2 857 678
- JP-A- 61 140 617
- JP-A- 2007 192 309

## Beschreibung

Die vorliegende Erfindung betrifft eine Wellenanordnung, insbesondere für Getriebe von Kraftfahrzeugen, mit einer Welle und wenigstens einem an der Welle angeordneten Wälzlager, das mittels eines Fluids zu schmieren und/oder zu kühlen ist, wobei eine Fluidzuführeinrichtung dazu ausgelegt ist, das Fluid der Wellenanordnung von radial außen zuzuführ,en gemäß dem Oberbegriff des Anspruchs 1.

Eine derartige Wellenanordnung ist aus dem Dokument EP 1 906 036 A2 bekannt.

Die an einer solchen Wellenanordnung angeordneten Bauteile können bspw. Radialwellendichtringe, Wälzlager, Nadellager oder Zahnräder bzw. Synchronisierungseinrichtungen von Synchron-Schaltkupplungen sein. Zum Zuführen von Fluid zu solchen Bauteilen ist zum einen die so genannte Einspritzschmierung bekannt. Hierbei wird ein Fluid über Kanäle in der Welle axial zugeführt und über entsprechende radiale Öffnungen in der Welle den jeweiligen Bauteilen zugeführt. Mittels solcher Anordnungen können relativ große Fluidmengen zugeführt werden. Da die Fluidzufuhr generell von radial innen nach radial außen erfolgt, ist die Fluidzufuhr generell mit den ggf. auftretenden Zentrifugalkräften ausgerichtet.

Andererseits ist es in Getrieben bekannt, Bauteile im Wege der so genannten Tauchschmierung mit Fluid zu versorgen. Hierbei ist in der Regel ein Fluidsumpf vorgesehen, in den drehende Bauteile wie Zahnräder eintauchen und dabei Fluid zum Zwecke der Fluidversorgung mit hochschleudern.

Bei dieser Art von Fluidzufuhr ist es schwierig, Fluid in den Bereich nahe dem Außenumfang der Welle zuzuführen.

Das radial nach außen weggeschleuderte Fluid wird in der Regel über Auffangbleche oder dergleichen aufgefangen und dann zurückgeführt, entweder direkt in den Fluidsumpf oder zu einer Pumpe für die Einspritzschmierung.

Wenn das mit Fluid zu versorgende Bauteil ein Wellendichtring ist, so ist dafür zu sorgen, dass dessen an der Welle anliegende Dichtlippe nicht trocken läuft. Hierzu ist es bspw. bekannt, Fettdepots vorzusehen, oder so genannte Labyrinthdichtungen.

Wenn das Bauteil bspw. ein Losrad ist, so ist dessen Losradlager in der Regel mittels einer Tauchschmierung ebenfalls schwierig mit Fluid zu versorgen.

Aus dem Dokument DE 28 57 678 A1 ist ein zentrifugal wirkendes Schmiermittelsystem für verdeckt eingebaute Lager von Getrieben bekannt, mit einer Ölsammelstelle, von der das Öl über ein winkliges Ölleitblech durch zwei Ölleitkanäle auf das verdeckte Lager geleitet wird. Dies funktioniert jedoch nur bei sich drehender Welle und sobald sich genügend Öl in einem Sammelbecken gesammelt hat.

Aus dem Dokument US-A-2,014,859 ist eine Lagerdichtung bekannt, die als Labyrinthdichtung mit Axialkanälen ausgebildet ist.

Aus dem Dokument US-A-5,975,533 ist eine Anordnung zur Schmierung einer Radialwellendichtung mittels Fett bekannt, das über eine Labyrinthdichtung gehalten wird, ähnlich dem Aufbau, der aus der US-A-2,014,859 bekannt geworden ist.

Schließlich betrifft das Dokument WO 2008/0317777 A1 eine Dichtungsanordnung für ein Lager, wobei an der zu lagernden Welle eine Drehkontur zur Herstellung einer Förderwirkung in axialer Richtung bereitgestellt ist. Auch bei dieser Anordnung muss sich die Welle zum Erzielen der Fluidzuführwirkung drehen.

Eine weitere Wellenanordnung ist aus dem Dokument EP 0 668 450 A2 bekannt.

Vor diesem Hintergrund ist es eine Aufgabe der Erfindung, eine verbesserte Wellenanordnung anzugeben, die insbesondere für eine gute Fluidzuführung zu einem jeweiligen Bauteil sorgen kann.

Vorzugsweise soll eine solche Fluidversorgung auch dann gewährleistet sein, wenn die Welle sich nicht dreht.

Die obige Aufgabe wird durch eine Wellenanordnung gemäß Anspruch 1 gelöst.

Vorzugsweise weist die Wellenanordnung einen an der Welle anliegenden Wellendichtring auf, der auf einer der ersten axialen Seite des Wälzlagers gegenüberliegenden axialen Seite an einem Gehäuse festgelegt ist, wobei in axialer Richtung neben dem Wellendichtring eine Stauscheibe angeordnet ist, die mit dem Wellendichtring einen Fluidstauraum definiert und über einen Ringspalt von dem Außenumfang der Welle beabstandet ist, und wobei die Fluidzuführeinrichtung so angeordnet ist, dass Fluid in den Fluidstauraum zugeführt wird.

Hierbei staut sich auch bei stehender Welle in dem Fluidstauraum das Fluid, das zur Schmierung des Wellendichtrings erforderlich ist. Durch die Maßnahme, dass das Fluid im Wesentlichen nur über einen Ringspalt aus dem Fluidstauraum entweichen kann, wird gewährleistet, dass das Fluid hierdurch in die Nähe einer Dichtlippe des Wellendichtringes gelangt. Dies ermöglicht auch, dass der Wellendichtring ausgehend von einem Zustand mit stehender Welle bei Anlauf der Welle sofort mit Fluid versorgt wird, so dass ein Trockenlaufen verhindert wird.

Generell ist es denkbar, dass der Fluidstauraum in Gravitationsrichtung nach unten nicht vollständig abgedichtet ist. Der Leckagefluss sollte jedoch kleiner sein als der Ölzuführfluss mittels der Fluidzuführeinrichtung.

Von besonderem Vorzug ist es jedoch, wenn der Fluidstauraum in Gravitationsrichtung nach unten abgedichtet ist.

Hierbei ist gewährleistet, dass dieser bei allen Betriebsarten mit Fluid gefüllt ist.

Ferner ist es vorteilhaft, wenn der Ringspalt eine Breite von weniger als zwei Millimeter aufweist, insbesondere weniger als einen Millimeter.

Hierdurch wird gewährleistet, dass Fluid immer hinreichend nahe an der Dichtlippe des Wellendichtrings vorhanden ist.

Insgesamt ist es auch vorteilhaft, wenn die Stauscheibe in axialer Richtung zwischen dem Gehäuse (und/oder dem Wellendichtring) und dem Wälzlager angeordnet ist, derart, dass durch den Ringspalt strömendes Fluid dem Wälzlager zugeführt wird.

Bei dieser Ausführungsform kann erreicht werden, dass das aus dem Fluidstauraum ausströmende Fluid zur Versorgung des Wälzlagers verwendet werden kann.

Ferner ist es vorteilhaft, wenn die Stauscheibe (36) an dem Gehäuse festgelegt ist.

Hierdurch ergibt sich eine hohe Flexibilität hinsichtlich des Ortes und der Art der Festlegung.

Insbesondere ist es von Vorteil, wenn die Stauscheibe zwischen dem Gehäuse und dem Wälzlager festgelegt ist.

Bspw. kann die Stauscheibe dabei im Bereich des Lagersitzes angeordnet sein, insbesondere zwischen einem Lageraußenring des Wälzlagers und einem zu dessen axialer Festlegung vorgesehenen Gehäusebund.

Die Stauscheibe kann hierdurch sowohl in radialer Richtung als auch in axialer Richtung festgelegt werden.

Gemäß einer weiteren bevorzugten Ausführungsform ist die Stauscheibe im Bereich eines Innenumfangs eines Außenrings des Wälzlagers festgelegt.

Hierdurch sind besondere Maßnahmen zur Festlegung am Gehäuse nicht erforderlich. Ferner weisen viele Wälzlager im Bereich des Innenumfangs des Außenringes ohnehin Ausnehmungen zum Einklipsen von Dichtringen auf. Vorzugsweise wird die Stauscheibe daher in eine hierzu vorgesehene Nut im Bereich des Innenumfangs des Außenrings eingesetzt. Bei dieser Ausführungsform kann als Wälzlager ein Standardwälzlager mit Dichtringausnehmungen verwendet werden.

Erfindungsgemäß weist das Wälzlager einen an der Welle angeordneten Innenring und einen Außenring auf, wobei der Außenring mit einer Fluidführungshülse verbunden ist, die einen sich in axialer Richtung von dem Wälzlager weg erstreckenden Fluidführungsabschnitt aufweist.

Hierbei kann aus dem Wälzlager austretendes Fluid mittels der Fluidführungshülse radial gehalten werden, derart, dass das Fluid beim Ausströmen aus dem Wälzlager nicht sofort radial nach außen durch Zentrifugalkräfte oder Ähnliches weggeschleudert wird.

Demzufolge kann bei dieser Ausführungsform dafür gesorgt werden, dass auch ein neben dem Wälzlager angeordnetes weiteres Bauteil mit Fluid versorgt wird.

Die Fluidführungshülse ist vorzugsweise auf jener axialen Seite des Wälzlagers angeordnet, die dem Wellendichtring abgewandt ist.

Bei dieser Ausführungsform ist es ferner bevorzugt, wenn die Stauscheibe zwischen dem Wellendichtring und dem Wälzlager angeordnet ist.

Gemäß einer bevorzugten Ausführungsform ist die Fluidführungshülse im Bereich eines Außenumfangs des Außenrings festgelegt.

Hierbei kann die Fluidführungshülse bspw. zwischen dem Außenring und einem Gehäuseabschnitt festgeklemmt werden.

Von besonderem Vorzug ist es jedoch alternativerweise, wenn die Fluidführungshülse im Bereich eines Innenumfangs des Außenrings festgelegt ist.

Hierdurch sind Änderungen am Außenumfang des Außenrings nicht erforderlich. Ferner weisen viele Wälzlager im Bereich des Innenumfanges des Au-ßenringes ohnehin Ausnehmungen zum Einklipsen von Dichtringen auf. Vorzugsweise wird die Fluidführungshülse in eine hierzu vorgesehene Nut im Bereich des Innenumfangs des Außenrings eingesetzt.

Bei dieser Maßnahme kann folglich als Wälzlager ein Standardwälzlager verwendet werden.

Bei der Erfindung ist es ferner vorgesehen, dass in axialer Richtung neben dem Wälzlager ein weiteres Bauteil gelagert ist, das eine Axialausnehmung aufweist, in die der Fluidführungsabschnitt ragt.

Hierdurch kann das aus dem Wälzlager austretende Fluid mittels der Fluidführungshülse in axialer Richtung bis hin zu dem weiteren Bauteil geführt werden.

Ferner ist es vorteilhaft, wenn das weitere Bauteil im Bereich der Axialausnehmung wenigstens eine Fluidfördernut aufweist, die so geformt und ausgerichtet ist, dass sie bei einer Rotation des Bauteils Fluid aus der Axialausnehmung radial fördert, insbesondere radial nach innen.

Hierbei ist es möglich, das in die Axialausnehmung kommende Fluid bei Drehung des Bauteils in radialer Richtung zu fördern, und zwar insbesondere in radialer Richtung nach innen, also entgegengesetzt der Zentrifugalkraft.

Hierdurch ist es möglich, auch radial weiter innen liegende Abschnitte mit Fluid zu versorgen.

Von besonderem Vorteil ist es hierbei, wenn die Fluidfördernut als generell radial ausgerichtete Nut ausgebildet ist, deren Förderachse gegenüber einer vom Zentrum der Welle ausgehenden Radialrichtung abgewinkelt ist.

Bei dieser Ausführungsform kann die Fluidfördernut folglich in Drehrichtung das Fluid radial nach innen fördern, und zwar entgegengesetzt der Zentrifugalkräfte.

Insgesamt ist es hierbei ferner bevorzugt, wenn das weitere Bauteil ein Losrad ist, das mittels eines Losradlagers drehbar an der Welle gelagert ist, derart, dass mittels der Fluidfördernut gefördertes Fluid dem Losradlager zugeführt wird. Das Fluid kann dann folglich von dem Wälzlager über die Fluidführungshülse und die Fluidfördernut in das Losradlager, bspw. ein Nadellager, zugeführt werden. Beim Austritt an dem axial anderen Ende kann das Fluid dann bspw. einer dem Losrad zugeordneten Schaltkupplung, insbesondere einer Synchron-Schaltkupplung, zugeführt werden, um z.B. darin vorhandene Reibringe (Kegelringe) mit Fluid zu versorgen.

Die vorliegende Erfindung betrifft auch ein Fahrzeuggetriebe mit einer solchen Wellenanordnung.

Insgesamt kann mit der Erfindung folglich eine Fluidzuführung von radial außen erfolgen, wobei mehrere Bauteile, die axial nebeneinander angeordnet sind, nacheinander mit dem Fluid versorgt werden können.

Die Fluidversorgung ist dabei im Wesentlichen unabhängig davon, ob die Welle sich dreht oder nicht. Allerdings kann zur Fluidversorgung erforderlich sein, dass sich ein an der Welle angeordnetes Losrad dreht, so dass Fluid von einer Auffangeinrichtung dem Fluidstauraum zugeführt werden kann.

Insgesamt kann mittels der vorliegenden Erfindung folglich ein umfassendes Fluidversorgungskonzept für Wellendichtringe, Lager, Losräder, Synchronringe sowie Schaltgabelklauen bereitgestellt werden. Separat angetriebene Fördermittel wie Pumpen, Turbinenschaufeln oder Ähnliches sind dabei nicht notwendig. Die Erfindung lässt sich folglich mit wenigen Bauteilen realisieren.

Die Wellenanordnung kann in einem herkömmlichen Fahrzeuggetriebe verwendet werden. Dabei kann die Welle als Vollwelle ausgebildet sein. Sofern die Welle der Wellenanordnung als Hohlwelle ausgebildet ist, kann der darin befindliche Hohlraum als "Trockenraum" ausgebildet sein.

Daher eignet sich die vorliegende Wellenanordnung insbesondere zur Verwendung dort, wo durch die Hohlwelle eine zwangsläufig trocken laufende weitere Welle hindurchgeführt wird. Dies ist bspw. bei so genannten Range-Extendern der Fall, wenn z.B. eine durch die Hohlwelle hindurchgeführte, trocken laufende Welle einen Generator mit einem Verbrennungsmotor verbindet.

In diesem Fall kann ein zwei- oder mehrstufiges Getriebe an der Hohlwelle angeordnet sein.

Ausführungsbeispiele der Erfindung sind in der Zeichnung dargestellt und werden in der nachfolgenden Beschreibung näher erläutert. Es zeigen:
- Fig. 1: eine schematische Längsschnittansicht durch eine Wellenanordnung gemäß einer Ausführungsform der Erfindung;
- Fig. 1a: eine schematische Längsschnittansicht durch einen Teil einer Wellenanordnung gemäß einer Abwandlung der in Fig. 1 gezeigten Ausführungsform;
- Fig. 2: eine schematische Draufsicht in axialer Richtung auf ein Losrad einer erfindungsgemäßen Wellenanordnung;
- Fig. 3: eine schematische Ansicht einer alternativen Ausführungsform einer erfindungsgemäßen Wellenanordnung;
- Fig. 4: eine schematische axiale Draufsicht auf die Wellenanordnung der Fig. 3; und
- Fig. 5: eine Längsschnittansicht durch ein Wellenlager einer alternativen Ausführungsform einer erfindungsgemäßen Wellenanordnung.

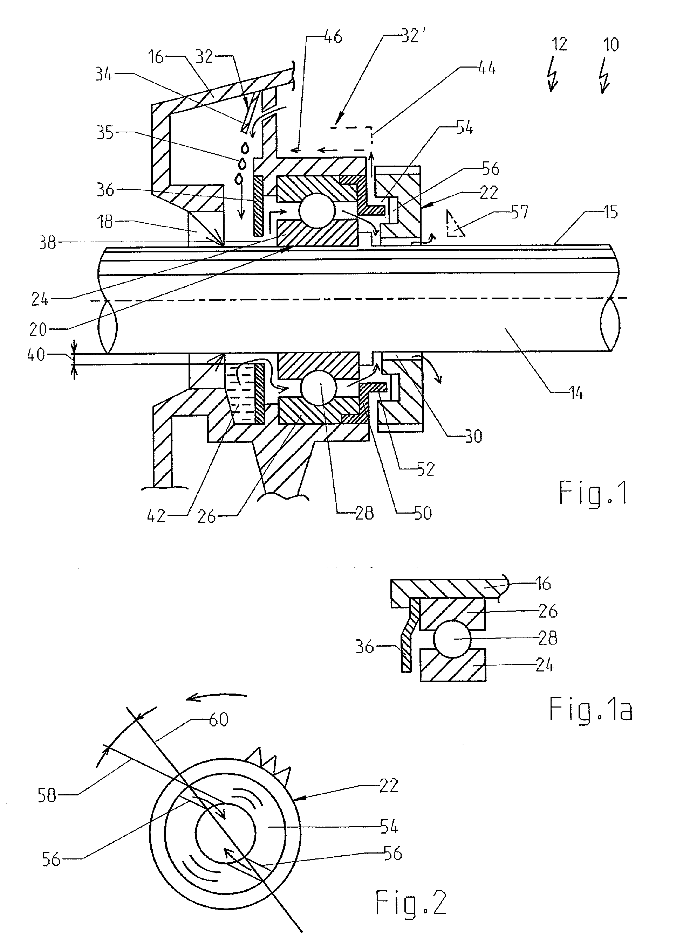

In Fig. 1 ist ein Getriebe generell mit 10 bezeichnet. Das Getriebe weist eine Wellenanordnung 12 auf. Die Wellenanordnung beinhaltet eine Welle 14 mit einem generell geschlossenen Außenumfang. Die Welle 14 kann als Vollwelle oder als Hohlwelle ausgebildet sein, wobei im Falle einer Hohlwelle der Innenraum als Trockenraum ausgebildet sein kann.

Das Getriebe 10 beinhaltet ferner ein Gehäuse 16, an dem die Welle 14 gelagert ist.

Zur Abdichtung eines Austrittsbereiches der Welle 14 aus dem Gehäuse ist ein Radialwellendichtring 18 vorgesehen. Ferner weist die Wellenanordnung 12 ein in axialer Richtung neben dem Wellendichtring 18 angeordnetes Wellenlager in Form eines Wälzlagers 20 auf. Ferner beinhaltet die Wellenanordnung 12 ein neben dem Wälzlager 20 angeordnetes Losrad 22.

Das Wälzlager 20 weist einen mit der Welle 14 fest verbundenen Innenring 24 und einen Außenring 26 auf, der an dem Gehäuse 16 festgelegt ist. Zwischen dem Innenring 24 und dem Außenring 26 ist eine Mehrzahl von Wälzkörpern 28 (bspw. Kugeln) angeordnet.

Das Losrad 22 ist mittels eines Losradlagers in Form eines Nadellagers 30 drehbar an der Welle 14 gelagert.

Die Wellenanordnung 12 wird mittels einer Fluidzuführeinrichtung 32 mit Fluid versorgt. Die Fluidversorgung erfolgt hierbei von radial außen nach radial innen. Hierzu kann an dem Gehäuse 16 bspw. ein Abtropfsteg 34 ausgebildet sein, von dem hochgeschleudertes Fluid 35 aufgrund Gravitationskräften auf die Welle abtropft.

Zwischen dem Wellendichtring 18 und dem Wälzlager 20 ist eine Stauscheibe 36 angeordnet. Die Stauscheibe 36 ist an dem Gehäuse 16 festgelegt. Die Stauscheibe 36 weist eine kreisrunde Öffnung auf, durch die die Welle 14 hindurchgeführt ist. Zwischen dem Innenumfang der Öffnung in der Stauscheibe 36 und dem Außenumfang 15 der Welle 14 ist ein Ringspalt 38 vorgesehen. Der Ringspalt weist eine Spaltbreite 40 auf, die vorzugsweise sehr klein ist, insbesondere mit einer Breite von weniger als zwei Millimetern, und bevorzugt mit einer Breite von weniger als einem Millimeter.

Die Stauscheibe 36 ist gegenüber dem Gehäuse 16 abgedichtet, so dass zwischen dem Wellendichtring 18 und der Stauscheibe 36 ein Fluidstauraum 42 eingerichtet ist. Die Fluidzuführeinrichtung 32 ist so angeordnet, dass das zugeführte Fluid 35 in den Fluidstauraum 42 gelangt und sich dort aufstaut, und zwar mindestens bis zur Höhe der Ausnehmung in der Stauscheibe 36.

Dadurch, dass die Spaltbreite 40 des Ringspaltes 38 sehr klein ist, ist gewährleistet, dass eine an dem Außenumfang 15 der Welle 14 anliegende Dichtlippe des Wellendichtringes 18 immer hinreichend mit Fluid benetzt ist, selbst wenn die Welle 14 sich nicht dreht oder mit sehr hohen Drehzahlen umläuft. Bei einem Anlauf der Welle 14 kann hierdurch folglich ein Trockenlaufen verhindert werden; des Weiteren kann ein Trockenlauf bei hohen Drehzahlen verhindert werden.

Das aus dem Fluidstauraum 42 über den Ringspalt 38 in axialer Richtung austretende Fluid gelangt in einen Raum zwischen der Stauscheibe 36 und dem Wälzlager 20. Das Fluid wird folglich in den Bereich zwischen dem Innenring 24 und dem Außenring 26 geleitet und dient folglich auch zur Fluidversorgung des Wälzlagers 20.

Bei 44 ist eine alternative Fluidzuführeinrichtung 32' schematisch dargestellt. Diese kann ein Fluidleitblech 44 beinhalten, das in axialer Richtung im Bereich zwischen dem Wälzlager 20 und dem Losrad 22 angeordnet ist, jedoch radial außerhalb des Wälzlagers 20. Mittels des Fluidleitbleches 44 kann insbesondere aus dem Bereich eines Verzahnungseingriffes des Losrades 22 mit einem damit kämmenden Zahnrad austretendes Fluid aufgefangen werden. Das von dem Fluidleitblech 44 aufgefangene Fluid kann dann durch einen schematisch angedeuteten Fluidkanal 46 hin zu dem Bereich geführt werden, von wo aus das Fluid 35 in den Fluidstauraum 42 gelangt.

Das aus dem Bereich zwischen dem Wellendichtring und der Stauscheibe 36 in das Wälzlager 20 eintretende Fluid tritt auf der axial gegenüberliegenden Seite aus dem Wälzlager 20 aus. Auf dieser Seite ist an dem Wälzlager 20 eine Fluidführungshülse 50 angebracht. Die Fluidführungshülse 50 ist bei dieser Ausführungsform im Bereich eines Außendurchmessers des Außenrings 26 festgelegt und weist einen sich von dem Wälzlager 20 in axialer Richtung weg erstreckenden Fluidführungsabschnitt 52 auf. Der Fluidführungsabschnitt 52 verhindert, dass aus dem Wälzlager 20 austretendes Fluid radial nach außen weggeschleudert wird.

In dem benachbarten Losrad 22 ist eine Axialausnehmung 54 ausgebildet. Der Fluidführungsabschnitt 52 erstreckt sich bis in die Axialausnehmung hinein, so dass das Fluid in die Axialausnehmung 54 gelangt. Der Fluidführungsabschnitt 52 überbrückt folglich den axialen Abstand zwischen dem Wälzlager 20 und der Axialausnehmung 54.

Am axialen Boden der Axialausnehmung 54 ist eine Mehrzahl von Fluidfördernuten 56 ausgebildet. Diese sind so geformt und ausgerichtet, dass sie bei einer Rotation des Losrades 22 das in die Axialausnehmung 54 gelangende Fluid radial nach innen fördern.

Hierdurch gelangt das Fluid in den Bereich des Losradlagers 30 und tritt in dieses in axialer Richtung ein. Auf der axial gegenüberliegenden Seite tritt das Fluid aus dem Losradlager 30 aus.

Auf der Austrittsseite des Fluides kann seitlich neben dem Losrad 22 bspw. eine Führungsmuffe 57 (wie in Fig. 1 schematisch angedeutet) eines Schaltkupplungspaketes angeordnet sein. Das Schaltkupplungspaket kann bspw. als Synchron-Schaltkupplungspaket ausgebildet sein. Das aus dem Losradlager 30 austretende Fluid wird dann folglich in dem Bereich zwischen dem Losrad 22 und der Führungsmuffe 57 radial nach außen abgeführt und kann dort zur Schmierung der Schaltkupplungsanordnung dienen, insbesondere von deren Synchroneinheit bzw. der Schaltmuffe und damit verbundener Schaltgabeln, etc.

Fig. 1a zeigt eine Abwandlung der in Fig. 1 gezeigten Ausführungsform, wobei eine Stauscheibe 36 zwischen dem Gehäuse 16 und dem Außenring 26 des Wälzlagers 20 festgelegt ist. Genauer gesagt ist die Stauscheibe 36 im Gehäuselagersitz zwischen dem Wälzlager 20 und dem zur axialen Festlegung des Lageraußenrings 26 (und damit des Lagers) vorgesehenen Gehäusebund positioniert. Die Stauscheibe 36 ist damit über den Lagersitz in radialer Richtung und zwischen dem Wälzlager 20 und dem Gehäusebund in axialer Richtung festgelegt. Eine ausreichende Abdichtung des Fluidstauraumes 42 (in Fig. 1a nicht gezeigt) kann hierbei z.B. mittels der Axialkraft aus der in axialer Richtung vorgespannten Wellenlagerung erreicht werden.

In Fig. 2 ist eine schematische Draufsicht auf eine beispielhafte Ausführungsform eines Losrades 22 gezeigt. Es ist zu erkennen, dass in der Ausnehmung 54 zwei diametral gegenüberliegende Fluidfördernuten 56 ausgebildet sind. Diese weisen eine Förderachse 58 auf, die gegenüber einer vom Zentrum der Welle 14 ausgehenden Radialrichtung 60 abgewinkelt ist. Der Winkel zwischen der Förderachse 58 und der Radialrichtung 60 kann bspw. im Bereich zwischen 3° und 80° liegen.

Durch diese Schrägstellung der Fluidfördernuten 56 kann bei einer Drehung des Losrades 22 (in einer bevorzugten Drehrichtung) eine Radialförderrichtung nach radial innen im Bereich der Axialausnehmung 54 erzielt werden.

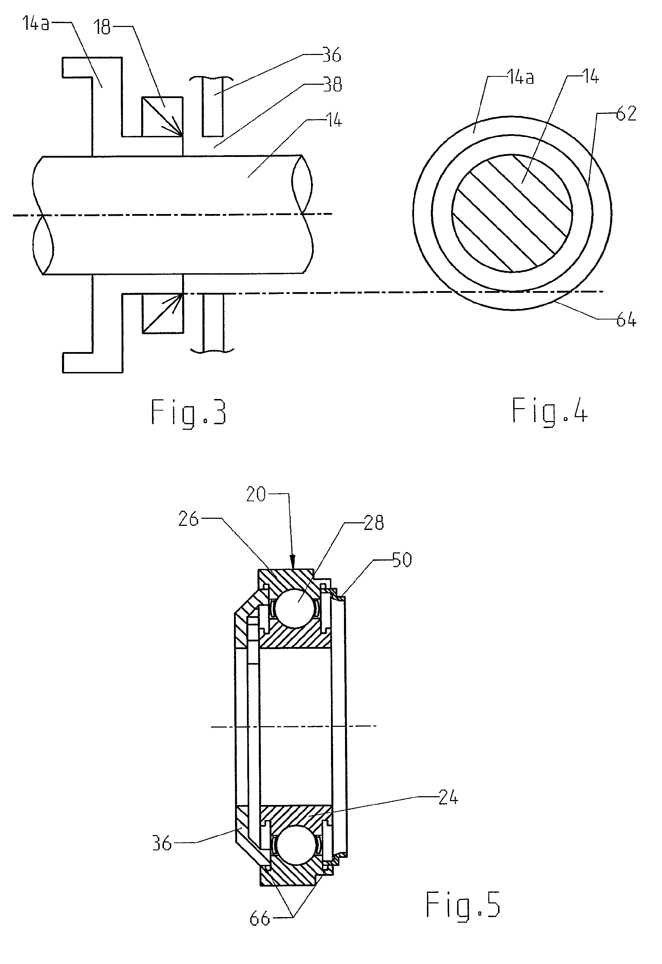

Figuren 3 und 4 zeigen eine alternative Ausführungsform einer Wellenanordnung. Diese entspricht hinsichtlich Aufbau und Funktionsweise generell der Wellenanordnung der Fig. 1. Gleiche Elemente sind daher mit gleichen Bezugsziffern versehen. Im Folgenden werden im Wesentlichen die Unterschiede erläutert.

Bei der Ausführungsform der Figuren 3 und 4 ist der Wellendichtring 18 an einem mit der Welle 14 verbundenen Bauteil 14a angeordnet, so dass die Dichtlippe des Wellendichtrings 18 radial außerhalb eines Innenumfanges der Ausnehmung in der Stauscheibe 36 liegt. Folglich kann bei dieser Ausführungsform durch den radial weiter außen liegenden Außenumfang 64 des Bauteils 14a (im Vergleich zum Innenumfang 62 der Ausnehmung in der Stauscheibe 36) eine dauerhafte Benetzung der Dichtlippe des Wellendichtrings 18 gewährleistet werden.

Fig. 5 zeigt eine alternative Ausführungsform eines Wälzlagers 20, bei dem die Fluidführungshülse 50 nicht im Bereich des Außenumfangs des Außenrings 26 angebracht ist, sondern im Bereich des Innenumfangs des Außenrings 26. Genauer gesagt, kann die Fluidführungshülse 50 in eine Dichtscheibenausnehmung 66 des Außenrings 26 eingesetzt werden.

Fig. 5 zeigt ferner eine alternative Möglichkeit der Festlegung der oben beschriebenen Stauscheibe 36. Wie es in Fig. 5 gezeigt ist, kann die Stauscheibe auch so ausgebildet sein, dass sie im Bereich des Innenumfangs des Außenrings 26 festgelegt wird. Insbesondere ist es möglich, die Stauscheibe 36 in eine Dichtscheibenausnehmung 60 des Außenrings 26 einzusetzen.

## Patentansprüche

1. Wellenanordnung (12), insbesondere für Getriebe (10) von Kraftfahrzeugen, mit einer Welle (14) und wenigstens einem an der Welle (14) angeordneten Wälzlager (20), das einen an der Welle (14) angeordneten Innenring (24) und einen Außenring (26) aufweist und das mittels eines Fluids (35) zu schmieren und/oder zu kühlen ist, wobei eine Fluidzuführeinrichtung (32) dazu ausgelegt ist, das Fluid (35) der Wellenanordnung (12) von radial außen zuzuführen, wobei der Außenring (26) mit einer Fluidführungshülse (50) verbunden ist, die einen sich auf einer ersten axialen Seite des Wälzlagers (20) in axialer Richtung von dem Wälzlager (20) weg erstreckenden Fluidführungsabschnitt (52) aufweist,
**dadurch gekennzeichnet, dass**
in axialer Richtung neben dem Wälzlager (20) ein weiteres Bauteil (22) gelagert ist, das eine Axialausnehmung (54) aufweist, in die der Fluidführungsabschnitt (52) ragt.

2. Wellenanordnung nach Anspruch 1, **gekennzeichnet durch** einen an der Welle (14) anliegenden Wellendichtring (18), der auf einer der ersten axialen Seite des Wälzlagers (20) gegenüberliegenden axialen Seite an einem Gehäuse (16) festgelegt ist, wobei in axialer Richtung neben dem Wellendichtring (18) eine Stauscheibe (36) angeordnet ist, die mit dem Wellendichtring (18) einen Fluidstauraum (42) definiert und über einen Ringspalt (38) von dem Außenumfang (15) der Welle (14) beabstandet ist, und wobei die Fluidzuführeinrichtung (32) so angeordnet ist, dass Fluid (35) in den Fluidstauraum (42) zugeführt wird.

3. Wellenanordnung nach Anspruch 2, **dadurch gekennzeichnet, dass** der Fluidstauraum (42) in Gravitationsrichtung nach unten abgedichtet ist.

4. Wellenanordnung nach Anspruch 3, **dadurch gekennzeichnet, dass** der Ringspalt (38) eine Breite (40) von weniger als 2 mm aufweist, insbesondere weniger als 1 mm.

5. Wellenanordnung nach einem der Ansprüche 2 - 4, **dadurch gekennzeichnet, dass** die Stauscheibe (36) in axialer Richtung zwischen dem Gehäuse (16) und dem Wälzlager (20) angeordnet ist, derart, dass durch den Ringspalt (38) strömendes Fluid (35) dem Wälzlager (20) zugeführt wird.

6. Wellenanordnung nach einem der Ansprüche 2 - 5, **dadurch gekennzeichnet, dass** die Stauscheibe (36) an dem Gehäuse (16) festgelegt ist.

7. Wellenanordnung nach einem der Ansprüche 2 - 6, **dadurch gekennzeichnet, dass** die Stauscheibe (36) zwischen dem Gehäuse (16) und dem Wälzlager (20) festgelegt ist.

8. Wellenanordnung nach einem der Ansprüche 2 - 6, **dadurch gekennzeichnet, dass** die Stauscheibe (36) im Bereich (66) des Innenumfangs eines Außenrings (26) des Wälzlagers (20) festgelegt ist.

9. Wellenanordnung nach einem der Ansprüche 1 - 8, **dadurch gekennzeichnet, dass** die Fluidführungshülse (50) im Bereich eines Außenumfangs des Außenrings (26) festgelegt ist.

10. Wellenanordnung nach einem der Ansprüche 1 - 8, **dadurch gekennzeichnet, dass** die Fluidführungshülse (50) im Bereich (66) eines Innenumfangs des Außenrings (26) festgelegt ist.

11. Wellenanordnung nach einem der Ansprüche 1 - 10, **dadurch gekennzeichnet, dass** das weitere Bauteil (22) im Bereich der Axialausnehmung (54) wenigstens eine Fluidfördernut (56) aufweist, die so geformt und ausgerichtet ist, dass sie bei einer Rotation des Bauteils (22) Fluid (35) aus der Axialausnehmung (54) radial fördert, insbesondere radial nach innen.

12. Wellenanordnung nach Anspruch 11, **dadurch gekennzeichnet, dass** die Fluidfördernut (56) als generell radial ausgerichtete Nut ausgebildet ist, deren Förderachse (58) gegenüber einer vom Zentrum der Welle ausgehenden Radialrichtung (60) abgewinkelt ist.

13. Wellenanordnung nach Anspruch 11 oder 12, **dadurch gekennzeichnet, dass** das weitere Bauteil ein Losrad (22) ist, das mittels eines Losradlagers (30) drehbar an der Welle (14) gelagert ist, derart, dass mittels der Fluidfördernut (56) gefördertes Fluid (35) dem Losradlager (30) zugeführt wird.

14. Fahrzeuggetriebe (10) mit einer Wellenanordnung (12) nach einem der Ansprüche 1 - 13.

## Claims

1. Shaft arrangement (12), particularly for transmissions (10) of motor vehicles, having a shaft (14) and at least one rolling bearing (20), which is arranged on the shaft (14), which comprises an inner ring (24) arranged on the shaft (14) and an outer ring (26), and which is to be lubricated and/or cooled by means of a fluid (35), a fluid feed device (32) being designed to feed the fluid (35) to the shaft arrangement (12) radially from outside, the outer ring (26) being connected to a fluid ducting sleeve (50), which comprises a fluid ducting portion (52) extending axially away from the rolling bearing (20) on a first axial side of the rolling bearing (20),
**characterized in that**
a further component (22), which has an axial recess (54), into which the fluid ducting portion (52) projects, is supported axially next to the rolling bearing (20).

2. Shaft arrangement according to claim 1, **characterized by** a shaft sealing ring (18), which rests on the shaft (14) and which is fixed to a housing (16) on an axial side of the housing (16), which opposes the first axial side of the rolling bearing (20), a baffle plate (36), which with the shaft sealing ring (18) defines a fluid baffle chamber (42) and which is separated by an annular gap (38) from the outer circumference (15) of the shaft (14), being arranged axially next to the shaft sealing ring (18), and the fluid feed device (32) being arranged so that fluid (35) is fed into the fluid baffle chamber (42).

3. Shaft arrangement according to Claim 2, **characterized in that** the fluid baffle chamber (42) is sealed off at the bottom in a gravitational direction.

4. Shaft arrangement according to Claim 3, **characterized in that** the annular gap (38) has a width (40) of less than 2 mm, in particular less than 1 mm.

5. Shaft arrangement according to one of Claims 2-4, **characterized in that** the baffle plate (36) is arranged axially between the housing (16) and the rolling bearing (20), in such a way that fluid (35) flowing through the annular gap (38) is fed to the rolling bearing (20).

6. Shaft arrangement according to one of Claims 2-5, **characterized in that** the baffle plate (36) is fixed to the housing (16).

7. Shaft arrangement according to one of Claims 2-6, **characterized in that** the baffle plate (36) is fixed between the housing (16) and the rolling bearing (20).

8. Shaft arrangement according to one of Claims 2-6, **characterized in that** the baffle plate (36) is fixed in the area (66) of an inner circumference of an outer ring (26) of the rolling bearing (20).

9. Shaft arrangement according to any of Claims 1-8, **characterized in that** the fluid ducting sleeve (50) is fixed in the area of an outer circumference of the outer ring (26).

10. Shaft arrangement according to any of Claims 1-8, **characterized in that** the fluid ducting sleeve (50) is fixed in the area (66) of an inner circumference of the outer ring (26).

11. Shaft arrangement according to any of Claims 1-10, **characterized in that** the further component (22) has at least one fluid delivery groove (56) in the area of the axial recess (54), the groove being formed and oriented so that as the component (22) rotates the groove delivers fluid (35) from the axial recess (54) radially, in particular radially inwards.

12. Shaft arrangement according to Claim 11, **characterized in that** the fluid delivery groove (56) is formed as a generally radially oriented groove, the delivery axis (58) of which is angled relative to a radial direction (60) originating from the centre of the shaft.

13. Shaft arrangement according to Claim 11 or 12, **characterized in that** the further component is an idle wheel (22), which is rotatably supported on the shaft (14) by means of an idle wheel bearing (30), in such a way that fluid (35) delivered by means of the fluid delivery groove (56) is fed to the idle wheel bearing (30).

14. Vehicle transmission (10) having a shaft arrangement (12) according to one of Claims 1-13.

## Revendications

1. Agencement d'arbre (12), en particulier pour des transmissions (10) de véhicules automobiles, comprenant un arbre (14) et au moins un palier à roulement (20) disposé sur l'arbre (14), lequel palier à roulement comprend une bague intérieure (24) disposée sur marbre (14) et une bague extérieure (26) et doit être lubrifié et/ou refroidi au moyen d'un fluide (35), un dispositif d'acheminement de fluide (32) étant conçu pour acheminer le fluide (35) jusqu'à l'agencement d'arbre (12) radialement à partir de l'extérieur, la bague extérieure (26) étant reliée à une douille de guidage de fluide (50) qui comprend une portion de guidage de fluide (52) s'étendant à l'écart du palier à roulement (20) dans la direction axiale sur un premier côté axial du palier à roulement (20),
**caractérisé en ce**
**qu'**un composant supplémentaire (22) est monté près du palier à roulement (20) dans la direction axiale, lequel composant comprend un évidement axial (54) dans lequel fait saillie la portion de guidage de fluide (52).

2. Agencement d'arbre selon la revendication 1, **caractérisé par** une bague d'étanchéité d'arbre (18) s'appliquant contre marbre (14), laquelle est fixée sur un boîtier (16) sur un côté axial opposé au premier côté axial du palier à roulement (20), un disque de retenue (36) étant disposé près de la bague d'étanchéité d'arbre (18) dans la direction axiale, lequel définit avec la bague d'étanchéité d'arbre (18) un espace de retenue de fluide (42) et est espacé de la périphérie extérieure (15) de marbre (14) par le biais d'un interstice annulaire (38), et le dispositif d'acheminement de fluide (32) étant disposé de telle sorte que du fluide (35) soit acheminé dans l'espace de retenue de fluide (42).

3. Agencement d'arbre selon la revendication 2, **caractérisé en ce que** l'espace de retenue de fluide (42) est fermé hermétiquement vers le bas dans le sens gravitationnel.

4. Agencement d'arbre selon la revendication 3, **caractérisé en ce que** l'interstice annulaire (38) présente une largeur (40) de moins de 2 mm, en particulier de moins de 1 mm.

5. Agencement d'arbre selon l'une quelconque des revendications 2 à 4, **caractérisé en ce que** le disque de retenue (36) est disposé entre le boîtier (16) et le palier à roulement (20) dans la direction axiale, de telle sorte que du fluide (35) s'écoulant à travers l'interstice annulaire (38) soit acheminé jusqu'au palier à roulement (20).

6. Agencement d'arbre selon l'une quelconque des revendications 2 à 5, **caractérisé en ce que** le disque de retenue (36) est fixé sur le boîtier (16).

7. Agencement d'arbre selon l'une quelconque des revendications 2 à 6, **caractérisé en ce que** le disque de retenue (36) est fixé entre le boîtier (16) et le palier à roulement (20).

8. Agencement d'arbre selon l'une quelconque des revendications 2 à 6, **caractérisé en ce que** le disque de retenue (36) est fixé dans la région (66) de la périphérie intérieure d'une bague extérieure (26) du palier à roulement (20).

9. Agencement d'arbre selon l'une quelconque des revendications 1 à 8, **caractérisé en ce que** la douille de guidage de fluide (50) est fixée dans la région d'une périphérie extérieure de la bague extérieure (26).

10. Agencement d'arbre selon l'une quelconque des revendications 1 à 8, **caractérisé en ce que** la douille de guidage de fluide (50) est fixée dans la région (66) d'une périphérie intérieure de la bague extérieure (26).

11. Agencement d'arbre selon l'une quelconque des revendications 1 à 10, **caractérisé en ce que** le composant supplémentaire (22) comprend au moins une rainure de transport de fluide (56) dans la région de l'évidement axial (54), laquelle est formée et orientée de telle sorte qu'elle transporte radialement, en particulier radialement vers l'intérieur, du fluide (35) à partir de l'évidement axial (54) lors d'une rotation du composant (22).

12. Agencement d'arbre selon la revendication 11, **caractérisé en ce que** la rainure de transport de fluide (56) est réalisée sous forme de rainure orientée généralement radialement, dont l'axe de transport (58) est incliné par rapport à une direction radiale (60) partant du centre de l'arbre.

13. Agencement d'arbre selon la revendication 11 ou 12, **caractérisé en ce que** le composant supplémentaire est une roue folle (22) qui est montée à rotation sur marbre (14) au moyen d'un palier de roue folle (30), de telle sorte que du fluide (35) transporté au moyen de la rainure de transport de fluide (56) soit acheminé jusqu'au palier de roue folle (30).

14. Transmission de véhicule (10) comprenant un agencement d'arbre (12) selon l'une quelconque des revendications 1 à 13.
